# EUROPEAN PATENT APPLICATION

(11) **EP 2 894 046 A1**
(43) Date of publication of application: **15.07.2015**
(21) Application number: 15151141.7
(22) Date of filing: 14.01.2015
(51) Int. Cl.: B44C 1/17, C08G 59/16, C08G 73/02

(54) **BINDER COMPOSITION FOR DECALCOMANIA**

(30) Priority: 14.01.2014 IT BO20140006
(71) Applicant: Cabro S.p.A., 52100 Arezzo (IT)
(72) Inventor: Betti, Francesca, 52100 AREZZO (IT)
(74) Representative: Mangini, Simone

(57) **Abstract**

The present invention concerns a method to prepare a binding composition for a precious metal-based decalcomania formulation comprising in the following order the steps of: mixing a polyamine and at least one first carboxylic acid to obtain a polyaminoamide; mixing the polyaminoamide with an epoxy resin to obtain a mixture; heating the mixture; adding to said mixture a second carboxylic acid having 2 to 4 carbon atoms, in the presence of cyclohexanol; evaporating the cyclohexanol.

## Description

The present invention relates to a method for preparing a binding composition, a binding composition, a decalcomania formulation and uses of the binding composition.

The present invention furthermore relates to a decalcomania.

Polyaminoamides are an important class of resins used mainly as polymerization agents for the preparation of coating compositions.

Like polyamides, polyaminoamides are obtained by reaction of a first carboxylic acid and polyamine. They differ, however, in their viscosity and the properties they impart to the coatings to which they are added.

While polyamides are available with viscosity ranging from approximately 10000 to 500000 cP, polyaminoamides generally have a viscosity ranging from 100 to 5000 cP. This allows the use of polyaminoamides in formulations free from solvents or comprising very small quantities of solvent. Polyaminoamides (unlike simple polyamides) have free amine groups (which during preparation of the resin did not react with carboxylic groups to obtain amide functions).

Polyamides guarantee the coating, in which they are included, an excellent combination of resistance to water and corrosion, mainly due to the hydrophobicity of the fatty acid from which they are obtained. Furthermore, they can offer good flexibility and acceptable drying times. Polyaminoamides, on the other hand, generally result in the formation of less flexible films than those obtained with polyamides and a poor surface appearance of the coating while maintaining high resistance to water and to corrosion.

Many polymerisation agents for epoxy resins have the drawback of rising towards the surface of the coating when added to the epoxy resin. This behaviour is generally responsible for the formation of exudates which can negatively affect the appearance of the coating and its adhesion to the surface. Furthermore, a high concentration of amines on the surface can result in the formation of reddish areas known in the industry as blush.

Polyamides do not have this drawback especially when they react with an epoxy resin for an induction time of 1 hour. Polyaminoamides, on the other hand, generally result in such high levels of exudate and blush that it is not possible to eliminate them even after a few hours of induction.

Precious metal formulations, in both liquid form and paste form, have been used for many years for the decoration of various types of substrates such as glass, ceramic, porcelain, tiles and other silicate-based substrates. These preparations generally contain one or more organic compounds of precious metals which are substantially soluble in an organic medium: typical organic compounds of precious metals include resinates, in particular sulforesinates. Furthermore, these preparations contain one or more solutions of organometallic compounds such as resinates, carboxylates and alkoxides of elements like Rh, Bi, Cr, V, Ni, Co, Fe, Sn, Zr, Ta, Si, B, Al which affect the formation and adhesion of the film to the substrate. The rest of the formulation is represented by a combination of at least one solvent and one binder.

The precious metal formulations can be applied on a substrate using numerous methods, for example by means of a hand brush, by means of neoprene printing or by means of pad printing. Of these methods, application by means of screen printing processes (screen printing) is very interesting, in particular, indirect screen printing processes (indirect screen printing), also known as decalcomania.

In decalcomania application, a decorative layer comprising a precious metal formulation is applied directly to a decalcomania support, in particular paper provided with a coating, such as carboxymethylcellulose, soluble in water.

The precious metal formulations for application by indirect screen printing should contain a binder such as to give the preparation some special characteristics. Firstly, after printing on the decalcomania paper, the decorative layer should have acceptable drying times (less than 2 hours) to allow rapid application of the coating. However, the drying should not be too fast, since in this case there may not be sufficient time to transfer the precious metal formulations onto the decalcomania paper. Furthermore, the decorative layer must not dissolve in water, so that after being wetted with water, it separates from the support without being damaged. The decorative layer must furthermore be characterised by good flexibility so that it can be applied to substrates which are then fired without damage to the decorated subject.

Many of the formulations currently available do not satisfactorily present the characteristics described above.

Although the binders become exhausted during the firing, they nevertheless have a considerable effect on the quality of the decoration: it is known, in fact, that depending on the binding system used, dark decorations, opaque (bright fog) decorations and/or inadequate combustion or adhesion may be obtained.

To limit these drawbacks, the precious metal formulations for decalcomania can contain mixtures of binders. US7041722 reports that a typical binder mixture for precious metal formulations is the following: 25-50% by weight of one or more polyamide resins, 5-30% by weight of one or more sulfonated resins, 10-20% by weight of one or more resins modified with colophony, 10-40% by weight of one or more alkylphenolic resins and 0-30% by weight of other resins.

In US2005/0153144 the mixture of binders has been completely substituted by one single class of resin, i.e. the polyaminoamide Aradur 100DB or Aradur 350DB produced by Vantico.

However, it has been observed that the use of polyaminoamides in binding compositions for preparations containing precious metals for decalcomania can lead to undesired polymerisation with the organometallic groups of the precious metal-based composites, thus altering the properties of said decalcomania preparations.

The object of the present invention is, therefore, to provide a method to prepare a binding composition, a binding composition, a decalcomania formulation, uses of the binding composition and a decalcomania, which overcome, at least partially, the drawbacks of the known art and at the same time are easy and inexpensive to implement. In particular, one object of the present invention is to provide a binding composition for a precious metal formulation for decalcomania which at least partially: allows a decorative layer to be obtained which is flexible, has drying times compatible with industrial production processes, does not dissolve in water, is not damaged when separated from the support and/or allows decorations comprising optimal quality precious metals to be obtained on the final article.

According to the present invention, a method to prepare a binding composition, a binding composition, a decalcomania formulation, uses of the binding composition and a decalcomania are provided according to the following independent claims and, preferably, to any one of the claims depending directly or indirectly on the independent claims.

The term "precious metals" indicates metals such as platinum, palladium, silver and gold, for example.

In accordance with a first aspect of the invention, a method is provided for the preparation of a binding composition for a precious metal-based decalcomania formulation comprising a first mixing step, during which a polyamine and at least one first carboxylic acid are mixed to obtain a polyaminoamide.

Advantageously, the ratio between the weight of the polyamine and the weight of the first carboxylic acid ranges from 1/5 (in particular, 1/11; more precisely, 1/12) to 1/20 (in particular, from 1/10 to 1/17). In some cases, the ratio between the weight of the polyamine and the weight of the first carboxylic acid ranges from 1/10 (in particular, 1/12; more precisely, 1/12.5) to 1/23 (in particular, 1/20).

According to some embodiments, the polyamine has a formula H₂N(RNH)ₙRNH₂ in which R is a substituted or unsubstituted hydrocarbon residue (in particular, an unsubstituted alkyl residue) having 2 or 3 (in particular, 2) carbon atoms and n is an integer from 1 to 4. In particular, the polyamine is selected in the group consisting of triethylenetetramine, diethylenetriamine, tetraethylenepentamine, pentaethylenehexamine.

The first carboxylic acid comprises (mainly; in particular, is) a carboxylic acid with at least two carboxylic functions and a number of carbon atoms ranging from 30 to 80 (in particular, 36 to 72). According to some embodiments, the first carboxylic acid comprises (mainly; in particular, is) a carboxylic acid with a number of carbon atoms ranging from 30 to 60 (in particular, 36 to 54). In some specific cases, the carboxylic acid has a number of carbon atoms ranging from 30 to 40 (more precisely 36).

Advantageously, the first carboxylic acid comprises (is) an acid obtained from the polymerisation (in particular, dimerization, trimerization and/or tetramerization) of a fatty acid. In particular it is a polymer of an acid chosen in a group consisting of: oleic, linoleic and linolenic acid (and a combination thereof).

According to specific embodiments, the first carboxylic acid comprises (mainly; in particular, is) carboxylic acid with CAS 61788-89-4.

The polymerisation products consist mainly of dimers together with minimum quantities of trimers and tetramers. According to some embodiments, the first carboxylic acid is a mixture comprising 75-85% by weight of the dimer component and 15-25% by weight of the trimer and/or tetramer component. Said percentages are expressed as percentages by weight out of the total weight of said first carboxylic acid.

In particular, the mixture of the polyamine and the first carboxylic acid is heated to a temperature ranging from 180°C to 260°C, advantageously 190°C to 250°C, more precisely approximately 220°C (to obtain the polyaminoamide). According to some embodiments, the mixture of the polyamine and the first carboxylic acid is heated to a temperature ranging from 160°C (in particular, 170°C; more precisely, 180°C) to 260°C (in particular, 240°C; more precisely, 220°C). According to specific embodiments, the mixture of the polyamine and the first carboxylic acid is heated to a temperature ranging from 170°C to 230°C. In some cases, the mixture of the polyamine and the first carboxylic acid is heated (to the temperatures indicated above) for a time ranging from approximately 30 minutes (in particular, from 45 minutes; more precisely, from 50 minutes) to approximately 90 minutes (in particular, to 75 minutes; more precisely, to 70 minutes).

Advantageously, during the first mixing step, if the polyamine and the first carboxylic acid are mixed together with another component (for example a monocarboxylic acid), the other component is no more than 10% by weight of the sum of the weights of the polyamine and the carboxylic acid.

The polyaminoamide thus obtained is (cooled and) mixed with an epoxy resin (in the absence of other substances) so as to obtain a mixture. In particular, said mixing is carried out at a temperature ranging from 110°C to 150°C, advantageously 120°C to 140°C, more precisely at a temperature of approximately 130°C.

The epoxy resin comprises a derivative of bisphenol, in particular of bisphenol A. More precisely, it comprises (is) bisphenol A and a reactive diluent.

An example of reactive diluent is chosen in the group consisting of: O-cresyl glycidyl ether (CAS 2210-79-9), 1,6-hexanediol diglycidyl ether, or 1,4-butanediol diglycidyl ether (or similar) (and a combination thereof). According to specific embodiments, the reactive diluent comprises (more precisely is) O-cresyl glycidyl ether (CAS 2210-79-9).

Subsequently, the mixture (of the polyaminoamide and the epoxy resin) is heated to a temperature ranging from 180°C to 260°C, advantageously 190°C to 250°C, in particular approximately 220°C. According to some embodiments, the mixture (of the polyaminoamide and the epoxy resin) is heated to a temperature ranging from 160°C (in particular, from 170°C; more precisely, from 180°C) to 260°C (in particular, to 240°C; more precisely, to 220°C). According to specific embodiments, the mixture (of the polyaminoamide and the epoxy resin) is heated to a temperature ranging from 170°C to 230°C. In some cases, the mixture (of the polyaminoamide and the epoxy resin) is heated (to the temperatures indicated above), for a time ranging from approximately 30 minutes (in particular, 45 minutes; more precisely, 50 minutes) to approximately 90 minutes (in particular, 75 minutes; more precisely 70 minutes).

In this way an intermediate product is obtained (in which the epoxy resin blocks part of the free amine groups).

Advantageously, the ratio between the weight of the epoxy resin and the weight of the polyaminoamide (i.e. the sum of the weights of the polyamine and the first carboxylic acid) ranges from 1/15 to 1/65 (in particular, 1/20 to 1/63). According to some embodiments, the ratio between the weight of the epoxy resin and the weight of the polyaminoamide (i.e. the sum of the weights of the polyamine and the first carboxylic acid) ranges from 1/25 (in particular, from 1/29) to 1/50 (in particular, to 1/47). In some specific cases, the ratio between the weight of the epoxy resin and the weight of the polyaminoamide (i.e. the sum of the weights of the polyamine and the first carboxylic acid) ranges from 1/30 (in particular, from 1/31) to 1/45.

It is hypothesised that in this manner (only) a part of the free amine groups of the polyaminoamide are "blocked" by the epoxy resin.

In particular after cooling, advantageously at a temperature ranging from 80°C to 120°C (in particular, 90°C to 110°C; more precisely, at approximately 100°C), a second carboxylic (monocarboxylic) acid having 2 to 4 carbon atoms is added to the intermediate product (in the presence of an organic solvent). The second carboxylic acid is advantageously selected in a group consisting of: acetic acid, propanoic acid, butanoic acid (and a combination thereof). The solvent used is advantageously selected in the group consisting of cyclohexanol, cyclohexanone, isopropanol, hexanol (in particular, 1-hexanol) (and a combination thereof).

At this point, the temperature is brought to between 100°C and 140°C (to favour evaporation of the water formed following condensation between the amine groups and the carboxylic groups). Advantageously, this temperature (as indicated above; in particular, approximately 120°C) is maintained for a time ranging from approximately 30 minutes (in particular, from 45 minutes; more precisely, from 50 minutes) to approximately 90 minutes (in particular, to 75 minutes; more precisely, to 70 minutes).

Advantageously, the weight of the polyamine ranges from 1.5% to 4.5% (in particular, from 2% to 4%).

Advantageously, the weight of the first carboxylic acid ranges from 37% to 67% (in particular, 40% to 64%). In some cases, the weight of the first carboxylic acid ranges from 37% to 53% (in particular, 40% to 50%).

Advantageously, the weight of the epoxy resin ranges from 0.5% to 2.5% (in particular, 0.8% to 2%; more precisely, up to 1.7%). In some cases, the weight of the epoxy resin ranges from 1% to 2% (in particular, 1.5%).

Advantageously, the weight of the second carboxylic acid ranges from 5% to 8% (in particular, 6.8% to 8%). In some cases, the weight of the second carboxylic acid ranges from 5% to 7%.

Advantageously, the weight of the solvent ranges from 20% (in particular, from 23%) to 53% (in particular, to 50%; more precisely, to 49.4%). In some cases, the weight of the solvent ranges from 33% to 53% (in particular, 36% t 49.4%).

The percentages by weight indicated above are considered relative to the overall sum of the weights of the polyamine, the first carboxylic acid, the epoxy resin, the second carboxylic acid and the solvent.

According to some specific embodiments, the sum of the weights of the polyamine, the first carboxylic acid, the epoxy resin, the second carboxylic acid and the solvent is at least 95% (in particular, at least 98%; more precisely, at least 99%) of the weight of the binding composition.

In accordance with a second aspect of the present invention, a binding composition obtained (or obtainable) according to the method of the first aspect of the present invention is (therefore) also provided.

The binding composition according to the second aspect is used to prepare a precious metal-based decalcomania formulation.

In accordance with a third aspect of the present invention, a decalcomania formulation is provided comprising the binding composition according to the second aspect of the present invention. More precisely, the decalcomania formulation comprises 17% to 27% (in particular, 20% to 25%), by weight, relative to the overall weight of the decalcomania formulation, of the binding composition.

According to some embodiments, the decalcomania formulation comprises a second binder. More precisely, the decalcomania formulation comprises 7% to 13% (in particular, 8% to 12%), by weight, relative to the overall weight of the decalcomania formulation, of the second binder. According to some embodiments, the second binder comprises (is) a colophony solution (in particular, in English lavender oil).

In particular, the formulation further comprises at least one organic compound comprising a precious metal. In some cases, the formulation comprises at least two organic compounds comprising a precious metal. According to some embodiments, the (each) organic compound comprises (more precisely, is) a sulforesinate of a precious metal. Alternatively or in addition, the (each) organic compound comprises a precious metal chosen from gold or silver.

In particular, the organic compound comprising a precious metal is chosen in the group consisting of: gold sulforesinate, silver sulforesinate (and a combination thereof).

Advantageously, the organic compound content comprising a precious metal (or the sum of the organic compound contents comprising a precious metal) in the decalcomania formulation is such that the percentage by weight of the precious metal/s is at least 9% (in particular, up to 15%) relative to the overall weight of the decalcomania formulation.

According to some embodiments, the decalcomania formulation comprises at least 6% (in particular, up to 15%) by weight of gold relative to the overall weight of the decalcomania formulation. Alternatively or in addition, the decalcomania formulation comprises at least 1% (in particular, up to 4%) by weight of silver relative to the overall weight of the decalcomania formulation.

According to some embodiments, the gold sulforesinate contains approximately 60% gold and the silver sulforesinate contains approximately 47% silver. Alternatively, it is also possible to use sulforesinates that contain different precious metal percentages. For example, solutions of gold sulforesinate with concentration of 30%, 40% or 45% of gold and solutions of silver sulforesinate with concentration of 20% or 25% silver are available on the market.

The organic compounds comprising a precious metal allow the desired visual effect (in particular colour and brightness) to be obtained on the decoration.

Advantageously, the decalcomania formulation further comprises a non-precious metal compound chosen in the group consisting of: resinate, carboxylate, alkoxide (and a combination thereof). According to some specific embodiments, the non-precious metal compound is a resinate of a non-precious metal or a mixture of resinates of the non-precious metals.

In particular, the non-precious metal is chosen in the group consisting of: elements such as Ru, Os, Rh, Bi, Cr, V, Ni, Co, Fe, Sn, Zr, Ta, Si, B, Al (and a combination thereof).

In particular, the resinate is chosen in the group consisting of: rhodium resinate, chromium resinate, silicon resinate, bismuth resinate, ruthenium resinate, osmium resinate, vanadium resinate (and a combination thereof).

In particular, the carboxylate is chosen in the group consisting of: rhodium carboxylate, chromium carboxylate, silicon carboxylate, bismuth carboxylate, ruthenium carboxylate, osmium carboxylate, vanadium carboxylate (and a combination thereof).

In particular, the alkoxide is chosen in the group consisting of: rhodium alkoxide, chromium alkoxide, silicon alkoxide, bismuth alkoxide, ruthenium alkoxide, osmium alkoxide, vanadium alkoxide (and a combination thereof).

According to some embodiments, the weight of the non-precious metal compound (or the sum of the weights of said compounds) ranges from 2.0% to 8.0% (in particular, 2.5% to 6%) of the overall weight of the decalcomania formulation.

Advantageously, the decalcomania formulation further comprises at least one thixotropic agent. According to some embodiments, the formulation comprises 3% to 4.5% by weight of the thixotropic agent relative to the overall weight of the decalcomania formulation.

In particular, the thixotropic agent comprises (is) a hydrogenate derivative of castor oil. For example, the thixotropic agent is an amide, like the products sold under the name Flowtone ST and Crayvallac Super (Cray Valley) respectively, or ISCATIX ISP and ISCATIX SR (ISCA), or the analogous products supplied by Elementis Specialties.

Advantageously, the decalcomania formulation further comprises at least one anti-foaming agent. According to some embodiments, the formulation comprises 1% to 2.5% by weight of the anti-foaming agent relative to the overall weight of the decalcomania formulation.

According to some embodiments, the anti-foaming agent is a silicone-based oil such as, for example, the polysiloxane solutions Dynoadd F-404 (Dynea), PAT ADD AF 70 (Patcham), DAPRO DF 5300 (Elementis Specialties) and Byk 065 (Byk).

In accordance with a fourth aspect of the present invention, it is hereby provided the use of the binding composition according to the second aspect for the preparation of a precious metal- based decalcomania formulation (more precisely, a precious metal-based decalcomania formulation of the third aspect of the present invention).

In particular, the preparation of the decalcomania formulation comprises a mixing stage, during which (substantially at ambient temperature - approximately 25°C) at least one organic compound comprising a precious metal is mixed with a further organic solvent and the binding composition according to the second aspect of the present invention.

The further organic solvent is the same as or different from the organic solvent described in relation to the first aspect of the present invention. In particular, the further organic solvent is chosen in the group consisting of cyclohexanol, pine essential oil, lavender essential oil, eucalyptus essential oil, English lavender essential oil (and a combination thereof).

Advantageously, during the mixing stage, at least one non-precious metal compound is mixed together with the organic compound comprising a precious metal, the solvent and the binding composition.

According to some embodiments, the mixture obtained during the mixing stage is heated (advantageously to a temperature ranging from 65°C to 85°C). Advantageously, it is also added (at the latter temperature) to at least one thixotropic agent and then (after bringing the temperature of the mixture back to approximately ambient temperature - approximately 25°C) to at least one anti-foaming agent so as to obtain the decalcomania formulation.

Advantageously, the organic compound comprising a precious metal and the non-precious metal compound are defined, independently from each other, according to the indications in the third aspect of the present invention.

According to some embodiments, the binding composition ranges from 17% to 27% (in particular, from 20% to 25%) of the overall weight of the decalcomania formulation.

Advantageously, the content of the organic compound comprising a precious metal (or the sum of the organic compound contents comprising a precious metal) in the decalcomania formulation is such that the percentage by weight of the precious metal/s is at least 9% (in particular, up to 15%) relative to the overall weight of the decalcomania formulation.

In particular, the weight of the non-precious metal (or the sum of said compounds) ranges from 2% to 8% (in particular, from 2.5% to 6%) of the overall weight of the decalcomania formulation.

In particular, the weight of the thixotropic agent ranges from 3% to 4.5% of the overall weight of the decalcomania formulation.

In particular, the anti-foaming agent ranges from 1% to 2.5% of the overall weight of the decalcomania formulation.

According to some embodiments, the decalcomania formulation has from 40% to 60% (in particular, 45% to 55%) by weight of the further organic solvent relative to the overall weight of the decalcomania formulation.

According to some specific embodiments (obviously also as regards the third aspect of the present invention), the sum of the weights of the binding composition, the organic compound, the resinate, the thixotropic agent, the anti-foaming agent and the further organic solvent is at least 95% (in particular, at least 98%; more precisely, at least 99%) of the weight of the decalcomania formulation.

According to some embodiments, the decalcomania formulation is then ground to eliminate any non-uniformity.

In accordance with a fifth aspect of the present invention, a use of the composition as per the second aspect of the present invention for decalcomania preparation is provided; in particular, the use entrails preparing a precious metal-based decalcomania formulation (according to the third aspect of the present invention).

The decalcomania formulation is transferred onto a screen and then printed.

In particular, the decalcomania is obtained by applying on a support, for example decalcomania paper, a layer for the creation of the decoration comprising the decalcomania formulation (and therefore the binding composition of the invention). At this point, the formulation is dried (by means of appropriate drying machines at a temperature ranging from 50°C to 70°C, or left to dry at ambient temperature). After deposition and drying of the layer for creation of the decoration, a further layer of coating is deposited to protect the decorative layer. Said coating takes the name of collodion, i.e. a vehicle characterised by the necessary elasticity to make the decalcomania adhere to spherical surfaces. The collodion can be applied by means of screen printing or spraying, but it cannot be applied by brush because it could act as a solvent, dissolving the precious metal film previously applied.

The decalcomania thus obtained is ready for application on a substrate, for example plates, glasses, cups, tiles etc.

In accordance with a sixth aspect of the present invention, a decalcomania for the production of a decoration on a substrate is provided, said decalcomania comprising a support (for example, made of paper) and a layer for the creation of the decoration (and a coating layer).

According to some embodiments, the layer for the creation of the decoration comprises a binding composition according to the second aspect of the present invention.

Advantageously, the decalcomania is obtained as a result of the use described in the fifth aspect of the present invention.

In particular, the layer for the creation of the decoration comprises (more precisely, consists of) the decalcomania formulation described in the third aspect of the present invention.

It should be noted that, during the preparation of the binding composition, the first carboxylic acid and the polyamine react with each other to form a polyaminoamide. It is known that said compounds, which have a certain quantity of primary and secondary amine groups, can give rise, once inserted in a precious metal-based formulation, to an undesired reaction with the organometallic functions of the precious metal compounds, thus causing an alteration of said formulation.

It should be noted that the use of the second carboxylic acid results in an inactivation of the free amine groups of the polyaminoamide, significantly reducing the possibility of undesired polymerisation.

Said effect is also obtained from the epoxy resin which, it is supposed (following what has been observed experimentally), blocks the free amine groups. Surprisingly, the addition of the epoxy resin allows reduction of the drying times.

Therefore, the method described above allows decalcomanias to be obtained that do not form reddish areas during firing and do not give rise to surface irregularities on the finished product.

Furthermore, the method described above allows a binding composition to be obtained with drying time particularly suited to industrial application.

It should be noted that, up to now, a variation in the viscosity of the decalcomania formulation was obtained by modifying the concentration of solvent in the decalcomania formulation. Surprisingly, it has now been possible to obtain a variation in the viscosity by modifying the quantity of polyamine and, more precisely, the ratio between the weights of the first carboxylic acid and the polyamine.

Further characteristics of the present invention will become clear from the following description of some merely illustrative and non-limiting examples.

### Example 1

### Preparation of the binding composition

Two binding compositions were prepared from the ingredients illustrated in Table 1 and Table 2.

**Table 1**

| Binding composition 1 | |
|---|---|
| Ingredients | % |
| First carboxylic acid (PRIPOL 1098 - Croda) | 40.0 |
| Triethylenetetramine | 3.2 |
| Epoxy resin (Araldite GY 2.53 - Huntsman) | 1.2 |
| Acetic acid | 7.5 |
| Cyclohexanol | 48.1 |
| Viscosity: 6000cP | |

**Table 2**

| Binding composition 2 | |
|---|---|
| Ingredients | % |
| First carboxylic acid (PRIPOL 1098 - Croda) | 40.0 |
| Triethylenetetramine | 3.0 |
| Epoxy resin (Araldite GY 253 - Huntsman) | 1. 2 |
| Acetic acid | 7.0 |
| Cyclohexanol | 48.8 |
| Viscosity: 3000cP | |

The mixture of a first carboxylic acid (CAS 61788-89-4) and triethylenetetramine was heated to 220°C for 1 hour in a reaction container. The temperature was then lowered to 130°C and the epoxy resin (bisphenol- with reactive diluent, e.g. O-cresyl glycidyl ether (CAS 2210-79-9)) was added. Subsequently, the mixture thus obtained was re-heated to 220°C for 1 hour. The mixture was then cooled to 100°C and the acetic acid and the solvent were added. The composition thus obtained underwent evaporation for 1 hour at 120°C.

### Example 2

### Preparation of precious metal-based decalcomania formulations

The binding compositions illustrated in tables 1 and 2 of example 1 were used in the preparation of precious metal-based formulations. In particular, the formulations illustrated in tables 3 to 5 were prepared.

**Table 3**

| Formulation 1 | |
|---|---|
| Ingredients | % |
| Gold sulforesinate (60% Au) | 16.6 |
| Silver sulforesinate (60% Ag) | 4.25 |
| Rhodium resinate, dissolved in pine oil (5% Rh) | 1.0 |
| Chromium resinate, dissolved in pine oil (6% Cr) | 1.0 |
| Silicon resinate, dissolved in pine oil (13% Si) | 0.5 |
| Bismuth resinate, dissolved in pine oil (8% Bi) | 1.0 |
| Cyclohexanol | 40.45 |
| Colophony, dissolved in English lavender oil | 10.0 |
| Binding composition 1 | 22.0 |
| Thixotropic agent | 2.2 |
| Anti-foaming agent | 1.0 |

**Table 4**

| Formulation 2 | |
|---|---|
| Ingredients | % |
| Gold sulforesinate (60% Au) | 16.6 |
| Silver sulforesinate (60% Ag) | 4.25 |
| Rhodium resinate, dissolved in pine oil (5% Rh) | 1.0 |
| Chromium resinate, dissolved in pine oil (6% Cr) | 1.0 |
| Silicon resinate, dissolved in pine oil (13% Si) | 0.5 |
| Bismuth resinate, dissolved in pine oil (8% Bi) | 1.0 |
| Cyclohexanol | 40.45 |
| Colophony, dissolved in English lavender oil | 10.0 |
| Binding composition 2 | 22.0 |
| Thixotropic agent | 2.2 |
| Anti-foaming agent | 1.0 |

**Table 5**

| Formulation 3 | |
|---|---|
| Ingredients | % |
| Gold sulforesinate (60% Au) | 16.6 |
| Silver sulforesinate (60% Ag) | 4.25 |
| Rhodium resinate, dissolved in pine oil (5% Rh) | 1.0 |
| Chromium resinate, dissolved in pine oil (6% Cr) | 1.0 |
| Silicon resinate, dissolved in pine oil (13% Si) | 0.5 |
| Bismuth resinate, dissolved in pine oil (8% Bi) | 1.0 |
| Cyclohexanol | 40.45 |
| Colophony, dissolved in English lavender oil | 10.0 |
| Binding composition 1 | 11.0 |
| Binding composition 2 | 11.0 |
| Thixotropic agent | 1.0 |
| Anti-foaming agent | 1.0 |

All the components of the formulations 1, 2 and 3 were weighed and mixed, except for the thixotropic agent and the anti-foaming agent.

Each formulation was maintained under stirring, and heated up to the temperature of 80°C. Once this temperature was reached, the thixotropic agent was added in the quantity given in the formulation. While maintaining under thorough constant stirring, the heating was interrupted and the formulation was left to cool. Once the formulation returned to ambient temperature, the anti-foaming agent was added.

The formulation was maintained under thorough constant stirring for at least 15 minutes.

Once the stirring phase was completed, the formulation was left for a few hours and then underwent the grinding process.

The decalcomania formulations 1, 2 and 3 thus obtained were characterised in terms of viscosity which was measured at 25°C with a digital rotational viscosity meter.

The results obtained are illustrated in table 6.

**Table 6**

| Formulation | Viscosity at 25°C (cP) |
|---|---|
| Formulation 1 | 50000-60000 |
| Formulation 2 | 15000-20000 |
| Formulation 3 | 30000-40000 |

The three formulations were then printed with a 400 mesh steel fabric on a paper support, dried and coated with the collodion 0693 (Ruger & Guenzel). After drying of the coating, the decoration can be applied on the desired support and thermally treated. The application of the decoration on the support involved the use of the following instruments: a container containing water with dimensions sufficient for immersion of the decalcomania (if possible use demineralised water), a soft flexible rubber spatula for making the decalcomania adhere to the surface of the chosen support, a damp cloth and a pair of scissors.

Application on the support involved firstly cutting out the part to be transferred and immersing said part in water for at least 2 minutes. Once said period had elapsed, the decalcomania was removed from the water and, holding it between the fingers, the part containing the coating was moved relative to the paper by means of a sliding movement. The part of the decalcomania containing the coating, protruding in the position chosen for the application, was laid on the application surface. Keeping the portion with the coating firmly in position, the paper continued to be moved out from below by means of a sliding movement until it was removed. The rubber spatula was used to eliminate the water and any air bubbles under the film with the coating. The support was then fired.

Once applied on ceramic supports, the decorations obtained had an unexpectedly high aesthetic quality. Among other things, the decorations obtained surprisingly did not have any blush. Furthermore, the dried formulations proved to be sufficiently elastic.

### Example 3

### Preparation of the binding composition

A binding composition was prepared from the ingredients illustrated in Table 1.

The mixture of a first carboxylic acid (CAS 61788-89-4) and triethylenetetramine was heated to 180°C for 1 hour in a reaction container. The temperature was then lowered to 130°C and the epoxy resin (bisphenol- with reactive diluent, e.g. O-cresyl glycidyl ether (CAS 2210-79-9)) was added. Subsequently, the mixture thus obtained was re-heated to 180°C for 1 hour. The mixture was then cooled to 100°C and the acetic acid and solvent were added. The composition thus obtained underwent evaporation for 1 hour at 120°C.

### Example 4

### Preparation of the binding composition

A binding composition was prepared from the ingredients illustrated in Table 1.

The mixture of a first carboxylic acid (CAS 61788-89-4) and triethylenetetramine was heated to 200°C for 1 hour in a reaction container. The temperature was then lowered to 130°C and the epoxy resin (bisphenol- with reactive diluent, e.g. O-cresyl glycidyl ether (CAS 2210-79-9)) was added. Subsequently, the mixture thus obtained was re-heated to 200°C for 1 hour. The mixture was then cooled to 100°C and the acetic acid and solvent were added. The composition thus obtained underwent evaporation for 1 hour at 120°C.

### Example 5

### Preparation of the binding composition

A binding composition was prepared from the ingredients illustrated in Table 7.

**Table 7**

| Binding composition 3 | |
|---|---|
| Ingredients | % |
| First carboxylic acid (PRIPOL 1098 - Croda) | 44.0 |
| Triethylenetetramine | 2.2 |
| Epoxy resin (Araldite GY 253 - Huntsman) | 1.5 |
| Acetic acid | 7.6 |
| Cyclohexanol | 44.7 |
| Viscosity: 2200cP | |

The mixture of a first carboxylic acid (CAS 61788-89-4) and triethylenetetramine was heated to 200°C for 1 hour in a reaction container. The temperature was then lowered to 130°C and the epoxy resin (bisphenol- with reactive diluent, e.g. O-cresyl glycidyl ether (CAS 2210-79-9)) was added. Subsequently, the mixture thus obtained was re-heated to 200°C for 1 hour. The mixture was then cooled to 100°C and the acetic acid and solvent were added. The composition thus obtained underwent evaporation for 1 hour at 120°C.

### Example 6

### Preparation of the binding composition

A binding composition was prepared from the ingredients illustrated in Table 8.

**Table 8**

| Binding composition 4 | |
|---|---|
| Ingredients | % |
| First carboxylic acid (PRIPOL 1098 - Croda) | 64.0 |
| Triethylenetetramine | 3.2 |
| Epoxy resin (Araldite GY 253 - Huntsman) | 1.5 |
| Acetic acid | 7.6 |
| Cyclohexanol | 23.7 |
| Viscosity: 7200cP | |

The mixture of a first carboxylic acid (CAS 61788-89-4) and triethylenetetramine was heated to 170°C for 1 hour in a reaction container. The temperature was then lowered to 130°C and the epoxy resin (bisphenol- with reactive diluent, e.g. O-cresyl glycidyl ether (CAS 2210-79-9)) was added. Subsequently, the mixture thus obtained was re-heated to 200°C for 1 hour. The mixture was then cooled to 100°C and the acetic acid and solvent were added. The composition thus obtained underwent evaporation for 1 hour at 120°C.

### Example 7

### Preparation of the binding composition

A binding composition was prepared from the ingredients illustrated in Table 9.

**Table 9**

| Binding composition 5 | |
|---|---|
| Ingredients | % |
| First carboxylic acid (PRIPOL 1098 - Croda) | 40.0 |
| Triethylenetetramine | 3.2 |
| Epoxy resin (Araldite GY 253 - Huntsman) | 1.0 |
| Acetic acid | 7.6 |
| Cyclohexanol | 48.2 |
| Viscosity: 3200 cP | |

The mixture of a first carboxylic acid (CAS 61788-89-4) and triethylenetetramine was heated to 200°C for 1 hour in a reaction container. The temperature was then lowered to 130°C and the epoxy resin (bisphenol- with reactive diluent, e.g. O-cresyl glycidyl ether (CAS 2210-79-9)) was added. Subsequently, the mixture thus obtained was re-heated to 200°C for 1 hour. The mixture was then cooled to 100°C and the acetic acid and solvent were added. The composition thus obtained underwent evaporation for 1 hour at 120°C.

### Example 8

### Preparation of precious metal-based decalcomania formulations

The binding compositions obtained in examples 3 to 7 were used in the preparation of corresponding precious metal-based formulations. In particular, the formulations illustrated in Table 10 were prepared following the method described in example 2.

**Table 10**

| **Formulations 4**-**8** | |
|---|---|
| Ingredients | % |
| Gold sulforesinate (60% Au) | 16.6 |
| Silver sulforesinate (60% Ag) | 4.25 |
| Rhodium resinate, dissolved in pine oil (5% Rh) | 1.0 |
| Chromium resinate, dissolved in pine oil (6% Cr) | 1.0 |
| Silicon resinate, dissolved in pine oil (13% Si) | 0.5 |
| Bismuth resinate, dissolved in pine oil (8% Bi) | 1.0 |
| Cyclohexanol | 40.45 |
| Colophony, dissolved in English lavender oil | 10.0 |
| **Binding composition (examples 3 to 7)** | 6.0 |
| Binding composition 2 | 16.0 |
| Thixotropic agent | 1.0 |
| Anti-foaming agent | 1.0 |

The five decalcomania formulations (each of which containing one of the compositions of one of the examples from 3 to 7) obtained were characterised in terms of viscosity which was measured at 25°C with a digital rotational viscosity meter. The results obtained are given below in Table 11.

**Table 11**

| Formulation | Viscosity at 25°C (cP) |
|---|---|
| Formulation 4 (example 3) | 26400 |
| Formulation 5 (example 4) | 32000 |
| Formulation 6 (example 5) | 28500 |
| Formulation 7 (example 6) | 29600 |
| Formulation 8 (example 7) | 21000 |

The five formulations were then used as described in example 2 so as to be applied on ceramic supports.

Once applied on ceramic substrates, the decorations obtained had an unexpectedly high aesthetic quality. Among other things, the decorations obtained surprisingly did not have any blush. Furthermore, the dried formulations proved to be sufficiently elastic.

## Claims

1. A method to prepare a binding composition for a precious-metal-based decalcomania formulation, said method comprising in that order the steps of:
a) mixing a polyamine and at least one first carboxylic acid, so as to obtain a polyaminoamide; said polyamine having formula H₂N(RNH)ₙRNH₂, wherein R is a substituted or unsubstituted hydrocarbon residue having 2 or 3 (in particular 2) carbon atoms and n is an integer ranging from 1 to 4, said first carboxylic acid comprising at least two carboxylic functional groups and a number of carbon atoms ranging from 30 to 80;
b) mixing said polyaminoamide with an epoxy resin, so as to obtain a mixture;
c) heating up said mixture, so as to obtain an intermediate product;
d) mixing the intermediate product with an organic solvent and with a second carboxylic acid, which is a monocarboxylic acid and has 2 to 4 carbon atoms;
e) causing said organic solvent to at least partially evaporate.

2. A method according to claim 1, wherein the ratio between the weight of the polyamine and the weight of the first acid ranges from 1/5 to 1/23 (in particular, to 1/20); the ratio between the weight of the epoxy resin and the weight of the polyamine ranges from 1/15 to 1/65.

3. A method according to claim 1 or 2, wherein said step a) and said step c) take place at a temperature ranging from 160°C (in particular, 180°) to 260°C; said step b) takes place at a temperature ranging from 110°C to 150°C.

4. A method according to any of the preceding claims, wherein said step d) takes place at a temperature ranging from 80°C to 120°C; said step e) takes place at a temperature ranging from 100°C to 140°C.

5. A method according to any of the preceding claims, wherein the weight of the polyamine ranges from 1.5% to 4.5%, the weight of the first carboxylic acid ranges from 37% to 63% (in particular, to 53%), the weight of the epoxy resin ranges from 0.5% to 2.5%, the weight of the second carboxylic acid ranges from 5% (in particular, from 6.8%) to 8%, and the weight of the organic solvent ranges from 23% (in particular, from 33%) to 53% relative to the overall sum of the weights of the polyamine, of the first carboxylic acid, of the epoxy resin, of the second carboxylic acid and of the organic solvent.

6. A method according to any of the preceding claims, wherein said polyamine is selected in the group consisting of: triethylenetetramine, diethylenetriamine, tetraethylenepentamine, pentaethylenehexamine, and a combination thereof.

7. A method according to any of the preceding claims, wherein said first carboxylic acid is a dicarboxylic acid and has a number of carbon atoms ranging from 36 to 72.

8. A method according to any of the preceding claims, wherein the first carboxylic acid comprises an acid obtained from the polymerization (in particular dimerization, trimerization and/or tetramerization) of a fatty acid chosen in the group consisting of: oleic acid, linoleic acid, linolenic acid, and a combination thereof.

9. A method according to claim 8, wherein said first carboxylic acid is a mixture comprising 75-85% by weight of the dimer component of the fatty acid relative to the total weight of said first carboxylic acid and 15-25% by weight of the trimer component of the fatty acid and/or of the tetramer component of the fatty acid relative to the total weight of said first carboxylic acid; with the proviso that, if during step a) the polyamine and the first carboxylic acid are also mixed with a third carboxylic acid, which is a monocarboxylic acid, the monocarboxylic acid does not exceed 10% by weight relative to the total weight of said first carboxylic acid.

10. A method According to any of the preceding claims, wherein said epoxy resin comprises a derivative of bisphenol, and in particular bisphenol A; in particular, said epoxy resin being a mixture of bisphenol A with a reactive diluent.

11. A method according to any of the preceding claims, wherein said second carboxylic acid is chosen in the group consisting of: acetic acid, propanoic acid, butanoic acid, and a combination thereof.

12. A method according to any of the preceding claims, wherein said organic solvent is chosen in the group consisting of cyclohexanol, cyclohexanone, isopropanol, hexanol, and a combination thereof.

13. A binding composition, which can be obtained with the method according to any of the claims from 1 to 12.

14. A precious-metal-based decalcomania formulation comprising a binding composition according to claim 13.

15. A use of a binding composition according to claim 13 to prepare a precious-metal-based decalcomania formulation.

16. A use according to claim 15 and comprising a step of mixing at least one organic compound comprising a precious metal with an organic solvent and the binding composition.

17. A use of a binding composition according to claim 13 to prepare decalcomanias; in particular, the use involves preparing a precious-metal-based decalcomania formulation according to claim 14.

18. A decalcomania to produce a decoration on a substrate; the decalcomania comprising a support, a layer for the creation of the decoration, and a coating layer; said layer for the creation of the decoration comprises a binding composition according to claim 13.
